Europäisches Patentamt

European Patent Office

Office européen des brevets

(11) Veröffentlichungsnummer : **0 144 858**
**B1**

(12) **EUROPÄISCHE PATENTSCHRIFT**

(45) Veröffentlichungstag der Patentschrift :
**15.03.89**

(21) Anmeldenummer : **84114052.8**

(22) Anmeldetag : **20.11.84**

(51) Int. Cl.⁴ : **C 03 C 15/00**, H 01 J 17/49

(54) **Verfahren zum Ätzen von Lochrasterplatten, insbesondere für Plasma-Kathoden-Display.**

(30) Priorität : 02.12.83 DE 3343704

(43) Veröffentlichungstag der Anmeldung :
**19.06.85 Patentblatt 85/25**

(45) Bekanntmachung des Hinweises auf die Patenterteilung : **15.03.89 Patentblatt 89/11**

(84) Benannte Vertragsstaaten :
**CH DE FR GB IT LI NL SE**

(56) Entgegenhaltungen :
EP--A-- 0 003 276
DE--A-- 2 024 608
GB--A-- 1 526 870
US--A-- 4 053 351
APPLIED OPTICS, Band 17, Nr. 12, 15. Juni 1978,
Seite 1845: "Safer way to etch glass"

(73) Patentinhaber : **Siemens Aktiengesellschaft Berlin
und München
Wittelsbacherplatz 2
D-8000 München 2 (DE)**

(72) Erfinder : **Schuster-Woldan, Hans, Dr. rer.nat., Dipl.-
Chem.
Drosselgasse 9
D-8031 Wörthsee Steinebach (DE)**
Erfinder : **Bürk, Hermann, Dipl.-Ing. FH
Winklerweg 5
D-8901 Egling an der Paar (DE)**
Erfinder : **Unger, Eugen, Dr. rer. nat., Dipl.-Chem.
Putzbrunnerstrasse 121
D-8000 München 83 (DE)**
Erfinder : **Weingand, Kaspar, Dr. rer. nat., Dipl.-Chem.
Mooshölzlweg 1
D-8184 Gmund (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Verfahren zur Herstellung von Durchbrüchen (Löchern) in Glasplatten, vorzugsweise mit feinsten Strukturen, insbesondere zum Ätzen von Lochrasterplatten für Plasma-Kathoden-Displays.

In der DE-OS 24 12 869 ist eine Entladungs-Lumineszenz-Anzeigeeinrichtung beschrieben und dargestellt. Für das Plasma-Kathoden-Display sind zur Steuerung der Elektronen auf dem Leuchtschirm zwei Arten von Steuereinheiten erforderlich. Im Prinzip handelt es sich hierbei um Lochplatten aus Glas, die jeweils beidseitig mit Leiterbahnen versehen sind. Die Leiterbahnen können die Elektronendurchtrittsöffnungen entweder voll umschließen oder lediglich an ihnen vorbeiführen. Die sogenannte Steuerplatte trägt Zeilen- und Spaltenleiter und ist für die Bildpunktauswahl verantwortlich. Die Tetroden-/Pentodenplatte wird als weitere Steuereinheit zur Erhöhung des Kontrasts, der Durchschlagsfestigkeit und auch, bei entsprechender Ausführung, zur Ablenkung der durch die Öffnungen hindurchtretenden Elektronen in x- und y-Richtung eingesetzt. Zur Erzielung eines gleichmäßigen Abstandes der zwei Steuereinheiten und zur Erhöhung der mechanischen Stabilität kann zwischen den metallisierten Platten eine Glaslochplatte eingebaut werden.

Um ein einwandfreies Bild auf dem Display zu erzeugen, müssen alle Platten über die Gesamtfläche völlig gleichmäßig geätzt werden. Die Ätzüberhänge bei den metallisierten Platten sollen hierbei extrem klein gehalten werden. Nur so wird eine scharf abgegrenzte Bildpunktausleuchtung erreicht. Weiter stellt sich das technische Problem, daß während des Glasätzprozesses der Fotolack nicht verändert wird und auf üblichem Wege entschichtet werden kann. Für die Qualität der Steuereinheiten ist es erforderlich, daß die Standzeit der Glasätze für eine hohe Stückzahl von zu ätzenden Platten gewährleistet wird.

Bisher wurden die Lochöffnungen in den Steuereinheiten entweder mit 40 %iger Flußsäure oder in der Gasphase einer 70 %igen Flußsäure (DE-PS 28 02 976) geätzt. Beim Ätzen mit Flußsäurelösung konnten in der Regel nur sehr grobe Lochraster erreicht werden. Die Ätzüberhänge, das heißt die Unterätzung der metallischen Leiter, waren hierbei unzulässig groß. Dies wirkte sich naturgemäß auf die Bildpunktqualität und auch auf die Haftfestigkeit der Leiterbahnen auf dem Glas aus. Beim Ätzen in der Gasphase zeigten sich aufgrund der extrem hohen Giftigkeit des Fluorwasserstoffs bei der technischen Realisierung vor allem im Hinblick auf größere Stückzahlen und Formate Schwierigkeiten.

Der Erfindung liegt die Aufgabe zugrunde, mit einfachen Mitteln ein Verfahren zum Ätzen von Glaslochplatten, insbesondere mit hohen Lochzahldichten, anzugeben, wobei der Ätzfaktor besonders günstig ausfällt. Unter Ätzfaktor versteht man bekanntlich das Verhältnis von Tiefenätzung zur Seitenätzung.

Diese Aufgabe wird nach der Erfindung dadurch gelöst, daß die Durchbrüche mit erwärmter, konzentrierter Ammoniumbifluorid-Lösung im Tauchätzverfahren geätzt und die nicht zu ätzenden Flächen mit einer gegen das Ammoniumbifluorid resistenten Abdeckung versehen werden. Der Vorteil dieses Verfahrens besteht darin, daß der Ätzfaktor wesentlich günstiger ist als bei Tauchätz- und Sprühätzverfahren mit wäßriger Flußsäure.

Die Metallisierung und auch der Fotolack werden bei dem Verfahren nach der Erfindung nicht angegriffen. Während des Ätzvorgangs verbleiben in den zu ätzenden Löchern in Ammoniumbifluorid unlösliche voluminöse Ätzprodukte, die das Verhältnis von Tiefen- zu Seitenätzung begünstigen. Beim Ätzen mit wäßriger Flußsäure hingegen entstehen beim Ätzvorgang keine das Loch verstopfende unlösliche Ätzprodukte, so daß auch die Seitenätzung ungehindert stattfinden kann. Die in den Löchern verbleibenden Ätzprodukte können nach Beendigung des Ätzvorgangs mit verdünnter, erwärmter Schwefelsäure entfernt werden.

Es ist zwar geläufig, mit Ammoniumbifluorid Quarze zu ätzen und auch Glasoberflächen, jedoch keine Durchbrüche.

Im Gegensatz zu den bekannten Verfahren des Tauch- und Sprühätzens ist das Verhältnis von Tiefenätzung zu Seitenätzung mindestens um den Faktor 1,5 günstiger. Konnten zum Beispiel nach dem bekannten Ätzverfahren bisher Steuerplatten mit den Lochrastermaßen 0,32 mm bzw. 0,64 mm, bei Lochgrößen von ca. 0,2 mm x 0,5 mm aus einer 0,1 mm dicken Glasfolie hergestellt werden, so ermöglicht das neue Ätzverfahren bei den gleichen Lochabmessungen die Herstellung aus ca. 0,15 mm dicken Glasfolien. Nach dem Ätzverfahren nach der Erfindung lassen sich auch die zur Abstützung der Steuerscheibe im Display erforderlichen Abstandslochplatten wesentlich vorteilhafter bzw. überhaupt erst herstellen.

Falls zum Ätzen der Glaslochplatten Metall, zum Beispiel Kupfer, als Ätzresist verwendet wird, ist es bezüglich der Unterätzung besonders vorteilhaft, eine Haftschicht aus Titan zwischen Glasplatte und Kupfer aufzubringen.

Beim Ätzen der Löcher in die Glasplatte entwickelt sich bei seitlicher Unterätzung bei der Reaktion zwischen Titan und Ammoniumbifluorid Wasserstoff, der die Ammoniumbifluorid-Lösung verdrängt und somit die seitliche Ätzung reduziert. Beim Tauchätz- bzw. Sprühätzverfahren mit Flußsäurelösung kommt dieser Effekt nicht zum Tragen, da die Reaktionsprodukte rasch genug entfernt werden, um eine Barriere gegen die angreifende Flußsäure aufzubauen.

Bei dem erfindungsgemäßen Verfahren besteht keine Gefahr mehr, daß die nicht zu ätzenden Stellen angegriffen werden. Mit dieser Lösung wird auch für großflächige Formate ein gleichmäßiges Ätzen erzielt.

Nach einer Weiterbildung der Erfindung wird zur Erzeugung des Ätzresists zwischen Glasplatte und Resistschicht eine Haftschicht aus Titan, Chrom, $Al_2O_3$ oder NiCr vorgesehen.

Zur Erleichterung der Ätzkontrolle kann auf den zu ätzenden Glasplatten jeweils eine nicht mit resistentem Belag versehene Testmarke vorgesehen werden.

Nach einer weiteren Ausgestaltung des erfindungsgemäßen Verfahrens werden die Glasplatten im Anschluß an den Ätzvorgang von den Reaktionsprodukten gereinigt, und zwar mit Hilfe heißer, verdünnter Schwefelsäure unter Ultraschalleinwirkung. Mit diesem Reinigungsverfahren sind auch äußerst feine Lochgrößen, zum Beispiel Löcher von 50 μm im Quadrat, zu reinigen.

Nach einer Weiterbildung der Erfindung besteht das Verfahren darin, daß sich die Ammoniumfluorid-Lösung vorzugsweise in einem bis 100 °C temperaturbeständigen Kunststoffbehälter befindet, direkt aufgeheizt und gerührt wird. Die direkte Heizung bewirkt eine schnellere und gleichmäßigere Erwärmung der Lösung und vermeidet die Kontaminierung des Wärmeübertragungsmediums im Ätzmittel.

Nach einer weiteren Ausgestaltung der Erfindung ist der Kunststoffbehälter doppelwandig. Zwischen den Wänden befindet sich eine Isolierschicht. Der Vorteil besteht darin, daß die Ammoniumbifluorid-Lösung nicht schnell abkühlt und somit keine Ammoniumbifluorid-Kristalle bildet.

Im Rahmen der Erfindung ist im Behälter auch eine Randabsaugvorrichtung eingebaut. Dadurch wird eine Arbeitsgefährdung durch austretende Flußsäuredämpfe vermieden.

Das Verfahren nach der Erfindung kann auch zum Ätzen von anderen definierten Strukturen eingesetzt werden, so zum Beispiel zum Ätzen eines Balkenmusters.

Ausführungsbeispiel :

Auf eine beidseitig mit je 30 nm Titan und 300 nm Kupfer metallisierte Glasplatte von ca. 0,15 mm Dicke wird mit Fotolack das Negativbild der für die Steuerplatte erforderlichen Leiterbahnstrukturen erstellt. Die nicht mit Fotolack abgedeckten Flächen werden zum Beispiel mit Kupfer und Nickel bzw. nur mit Nickel galvanisch verstärkt. Anschließend wird an den Stellen, an denen die Löcher in das Glas zu ätzen sind, der Fotolack fototechnisch entfernt und die Kupferschicht abgeätzt. Die Größe der in das Glas zu ätzenden Löcher beträgt ca. 0,1 mm x 0,45 mm. Das Lochraster beträgt 0,57 x 0,70 mm. Die Glasplatten werden in einer Horde in trockenem Zustand für ca. 10 Minuten je nach gewünschtem Ätzgrad in die Ammoniumbifluorid-Lösung eingebracht.

Nach dem Ätzprozeß werden die Glasplatten kurz abgespült und anhand einer vorgesehenen Testmarke der Ätzvorgang kontrolliert. Die in den geätzten Löchern noch vorhandenen Reaktionsprodukte, wie Calciumfluorid, Alkalihexafluorosilikate und so weiter, werden zweckmäßigerweise mit Hilfe eines Netzmittels mit Wasser herausgespült oder mit heiß verdünnter Schwefelsäure unter Ultraschalleinwirkung herausgelöst. Anschließend wird der restliche Fotolack entfernt und das zwischen den galvanisch verstärkten Leiterbahnen noch vorhandene Metall (Titan und Kupfer) weggeätzt, um so eine Isolierstrecke zwischen den Leiterbahnen zu erhalten. Für die metallischen Leiterbahnen bleiben noch genügend Haftflächen vorhanden.

Ansatz-Beispiel : 7 kg $NH_4HF_2$ . 2 $H_2O$ + 51 $H_2O$ (80 °C).

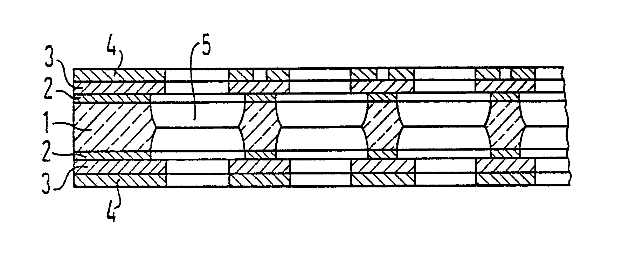

Die Erfindung wird anhand der Figur erläutert, die einen Schnitt durch eine Lochrasterplatte mit entsprechender Metallisierung zeigt. Mit 1 ist die Glaslochplatte bezeichnet. Auf dieser Platte ist beidseitig Titan 2, Kupfer 3 und Nickel 4 aufgebracht. Die geätzten Löcher tragen das Bezugszeichen 5.

## Patentansprüche

1. Verfahren zur Herstellung von Durchbrüchen (Löchern) in Glasplatten, vorzugsweise mit feinsten Strukturen, insbesondere zum Ätzen von Lochrasterplatten für Plasma-Kathoden-Display, dadurch gekennzeichnet, daß die Durchbrüche mit erwärmter, konzentrierter Ammoniumbifluorid-Lösung im Tauchätzverfahren geätzt und die nicht zu ätzenden Flächen mit einer gegen das Ammoniumbifluorid resistenten Abdeckung versehen werden.

2. Verfahren nach Anspruch 1, dadurch gekennzeichnet, daß zur Herstellung des Ätzresists zwischen Glasplatte und Resistschicht eine Haftschicht aus Titan, Chrom, $Al_2O_3$ oder NiCr vorgesehen wird.

3. Verfahren nach den Ansprüchen 1 und 2, dadurch gekennzeichnet, daß die Glasplatten im Anschluß an den Ätzvorgang von den Reaktionsprodukten mit heißer verdünnter Schwefelsäure unter Ultraschalleinwirkung gereinigt werden.

4. Verfahren nach den Ansprüchen 1 bis 3, dadurch gekennzeichnet, daß sich die Ammoniumbifluoridlösung vorzugsweise in einem bis 100 °C temperaturbeständigen Kunststoffbehälter befindet, direkt aufgeheizt und gerührt wird.

5. Verfahren nach Anspruch 4, dadurch gekennzeichnet, daß der Kunststoffbehälter doppelwandig ist und sich zwischen den Wänden eine Isolierschicht befindet.

6. Verfahren nach den Ansprüchen 4 und 5, dadurch gekennzeichnet, daß im Behälter eine Randabsaugvorrichtung eingebaut ist.

## Claims

1. Process for producing holes in glass plates, preferably having very fine structures, in particular for etching hole-matrix plates for plasma displays, characterized in that the holes are etched by dip etching using warmed concentration ammonium bifluoride solution, and the areas not to be etched are provided with a covering which is resistant to ammonium bifluoride.

2. Process according to Claim 1 characterized in that, in order to produce the etching resist, an adhesive layer of titanium, chromium, $Al_2O_3$ or NiCr is provided between the glass plate and the resist layer.

3. Process according to Claims 1 and 2, characterized in that, after the etching process, the glass plates are cleaned of reaction products using hot dilute sulphuric acid and ultrasound.

4. Process according to Claims 1-3, characterized in that the ammonium bifluoride solution is preferably located in a plastic container which is temperature-resistant to 100 °C, is heated directly and is stirred.

5. Process according to Claim 4, characterized in that the plastic container is twin-walled and an insulating layer is located between the walls.

6. Process according to Claims 4 and 5 characterized in that an edge suction device is built into the container.

**Revendications**

1. Procédé pour ménager des passages (trous) dans des plaques en verre, de préférence à structures très fines, notamment pour graver des plaques à matrice de trous pour un panneau cathodique d'affichage à plasma, caractérisé en ce qu'il consiste à graver les trous par un procédé de gravure au trempé avec une solution chauffée concentrée de bifluorure d'ammonium, et à munir les surfaces qui ne sont pas à graver d'une réserve résistant au bifluorure d'ammonium.

2. Procédé suivant la revendication 1, caractérisé en ce que, pour la préparation de la réserve de gravure, il est prévu, entre la plaque de verre et la couche de réserve, une couche adhérente en titane, en chrome, en $Al_2O_3$ ou en NiCr.

3. Procédé suivant la revendication 1 ou 2, caractérisé en ce qu'il consiste à nettoyer les plaques de verre, à la suite du processus de gravure des produits de la réaction, par de l'acide sulfurique dilué chaud sous l'action des ultrasons.

4. Procédé suivant l'une des revendications 1 à 3, caractérisé en ce que la solution de bifluorure d'ammonium se trouve de préférence dans un récipient en matière plastique tenant à une température allant jusqu'à 100 °C et chauffée directement et est agitée.

5. Procédé suivant la revendication 4, caractérisé en ce que le récipient en matière plastique est à double paroi et une couche isolante se trouve entre les parois.

6. Procédé suivant la revendication 4 ou 5, caractérisé en ce que, dans le récipient, est monté un dispositif d'aspiration en bordure.